# EUROPÄISCHE PATENTSCHRIFT

(11) **EP 4 499 536 B1**
(45) Veröffentlichungstag und Bekanntmachung des Hinweises auf die Patenterteilung: **23.09.2026**
(21) Anmeldenummer: 24729973.8
(22) Anmeldetag: 24.05.2024
(51) Int. Cl.: B65G 21/22, B65G 54/02

(54) **TRANSPORTSYSTEM**
TRANSPORT SYSTEM
SYSTÈME DE TRANSPORT

(30) Priorität: 09.06.2023 DE 102023115153
(43) Veröffentlichungstag der Anmeldung: 05.02.2025
(73) Patentinhaber: Weiss GmbH, 74722 Buchen (Odw.) (DE)
(72) Erfinder: MATYS, Sebastian, 32-060 Liszki (PL); STEINMANN, Ralf, 74182 Obersulm (DE); DUDEK, Pawel, 32-020 Wieliczka (PL)
(74) Vertreter: Manitz Finsterwald Patent- und Rechtsanwaltspartnerschaft mbB
(86) Internationale Anmeldenummer: PCT/EP2024/064320
(87) Internationale Veröffentlichungsnummer: WO 2024/251537

(56) Entgegenhaltungen:
- DE-A1- 102019 119 337
- DE-C- 464 431
- US-A- 2 860 014

## Beschreibung

Die Erfindung betrifft ein Transportsystem zum Transport von Objekten entlang einer Transportschiene.

Transportsysteme werden beispielsweise in der Automatisierungstechnik verwendet, um Objekte von einem Ort zu einem anderen Ort zu transportieren, beispielsweise von einer Fertigungs- oder Bearbeitungsstation zur nächsten. Hierzu werden die Objekte auf Transportwagen positioniert und die Transportwagen werden entlang einer Schiene verfahren. Die Schiene kann dabei geradlinige und/oder gekrümmte Abschnitte aufweisen.

In der Praxis wird besonders auf die Kurvengängigkeit des Systems Wert gelegt, da nicht kurvengängige Systeme diskontinuierlich arbeiten und ihre Taktraten limitiert sind. Des Weiteren sollten derartige Transportsysteme zugleich eine hohe Tragfähigkeit sowie eine gute Profilgenauigkeit aufweisen, um sowohl hohe Lasten transportieren zu können als auch eine hohe Genauigkeit in der Positionierung der Transportwagen und geringe Geräuschentwicklung beim Transport zu gewährleisten.

Die DE 464 431 C und die US 2 860 014 A offenbaren jeweils ein Transportsystem mit den Merkmalen des Oberbegriffs des Anspruchs 1.

Von wesentlicher Bedeutung ist es außerdem, dass die Transportwagen bzw. die Transportsysteme zuverlässig arbeiten und dennoch kostengünstig in der Herstellung und der Montage sind.

Es ist daher die Aufgabe der Erfindung, ein Transportsystem bereitzustellen, das alle der oben genannten Anforderungen erfüllen.

Die Aufgabe wird durch ein Transportsystem gemäß Anspruch 1 gelöst.

Ein erfindungsgemäßes Transportsystem umfasst eine Transportschiene mit zumindest einer ersten Lauffläche und mit einer zweiten Lauffläche, die einander gegenüberliegend angeordnet sind. Ferner weist das System zumindest einen Transportwagen auf, der einen Grundkörper umfasst, der mit einem Objektträger zur Aufnahme zumindest eines zu transportierenden Objekts gekoppelt oder koppelbar ist. Der Objektträger kann auch integral mit dem Grundkörper ausgebildet sein.

In der Regel sind mehrere Transportwagen vorgesehen, die bevorzugt individuell ansteuerbar sind, sodass sie unabhängig voneinander entlang der Transportschiene bewegt werden können.

Der Transportwagen umfasst zumindest eine um eine erste Drehachse drehbar gelagerte erste Laufrolle und zumindest eine um eine zweite Drehachse drehbar gelagerte zweite Laufrolle, wobei die erste und die zweite Laufrolle derart an dem Grundkörper angeordnet sind, dass die erste und die zweite Drehachse relativ zu dem Grundkörper ortsfest sind und dass sie mit der ersten Lauffläche zusammenwirken. Es ist denkbar, dass weitere ortsfeste Laufrollen vorgesehen sind.

Außerdem ist zumindest eine um eine dritte Drehachse drehbar gelagerte dritte Laufrolle vorgesehen, die an einem Schwenkarm angeordnet ist, der um eine Schwenkachse verschwenkbar an dem Grundkörper angeordnet ist. Der Schwenkarm ist durch eine zwischen dem Grundkörper und einem Kontaktpunkt des Schwenkarms wirkende Vorspanneinrichtung mit einer Vorspannkraft beaufschlagbar, durch die die dritte Laufrolle gegen die zweite Lauffläche gedrückt wird.

Die dritte Drehachse, die Schwenkachse und der Kontaktpunkt liegen auf einer geraden Linie.

Es können weitere Laufrollen vorhanden sein, die an einem Schwenkarm der vorstehend beschriebenen Art angeordnet sind. Grundsätzlich können auch mehrere Schwenkarme vorgesehen sein. Einem Schwenkarm können zwei oder mehr Laufrollen zugeordnet sein, bevorzugt jedoch genau eine.

Grundsätzlich können die Anzahl der ortfesten Laufrollen (jedoch mindestens 2) und die Anzahl der an einem Schwenkarm angeordneten Laufrollen bedarfsgerecht gewählt werden, beispielsweise um die bei Betrieb des Systems auftretenden Belastungen zuverlässig aufnehmen zu können.

In vielen Systemen variiert die Breite der Transportschiene in deren Verlauf. Insbesondere in einem Übergang von einem geradlinigen Transportabschnitt in einen Kurvenabschnitt mit konstantem Radius kann es zu einer Veränderung der Schienenbreite kommen. In diesem Übergang hat die Transportschiene einen Verlauf, der durch eine oder mehrere Funktionen (z.B. Polynome) beschrieben wird, die im Rahmen aufwendiger Optimierungsprozesse berechnet werden. Die beiden Seiten der Schiene können durch unterschiedliche Funktionen beschrieben werden, so dass deren Verlauf nicht notwendigerweise parallel ist.

Aufgrund der Lagerung der dritten Laufrolle an dem verschwenkbaren Schwenkarm ist ein Abstand zwischen der dritten Laufrolle einerseits und der ersten und der zweiten Laufrolle andererseits veränderbar, während der Abstand zwischen der ersten und der zweiten Laufrolle konstant ist. Durch die nicht-ortsfesten Lagerung der dritten Laufrolle können die Variationen der Schienenbreite und/oder Toleranzen zuverlässig aufgenommen werden. Durch die Vorspannkraft wird sichergestellt, dass die dritte Laufrolle stets mit hinreichend großer Kraft gegen die Schiene gepresst wird. Letztlich hat dies zur Folge, dass auch die erste und zweite Laufrolle zuverlässigen Kontakt mit der Transportschiene haben. Dabei wird angestrebt, dass kein Schlupf zwischen den Laufrollen und der Transportschiene auftritt.

Durch die Anordnung der dritten Drehachse, der Schwenkachse und des Kontaktpunkts auf einer geraden Linie wird ein besonders kompakter und einfach herzustellender und leicht montierbarer Schwenkarm geschaffen, der ohne konstruktiv aufwändige Mechanismen mit einer hinreichend großen Vorspannkraft beaufschlagbar ist.

Der Begriff Lauffläche ist im Kontext der vorliegenden Erfindung breit zu verstehen. Neben ebenen Flächen umfasst er auch Flächen mit komplexerer Geometrie. Derartige Laufflächen können Teilflächen umfassen, die geneigt zueinander angeordnet sind, wie etwa Laufflächen mit in einem Querschnitt keilförmiger Formgebung.

Weitere Ausführungsformen der Erfindung sind in den abhängigen Ansprüchen, der Beschreibung und den beigefügten Zeichnungen angegeben.

Erfindungsgemäß ist die Schwenkachse zwischen der dritten Drehachse und dem Kontaktpunkt angeordnet. Oder anders formuliert: Der Schwenkarm weist einen ersten und einen zweiten Abschnitt auf, die im Bereich der Schwenkachse miteinander in Verbindung stehen, wobei der Schwenkarm einstückig oder mehrstückig ausgebildet sein kann. Der Kontaktpunkt ist dem ersten Abschnitt zugeordnet, die dritte Drehachse ist dem zweiten Abschnitt zugeordnet.

Ein erster Abstand zwischen der Schwenkachse und dem Kontaktpunkt und ein zweiter Abstand zwischen der Schenkachse und der dritten Drehachse können gleich groß sein. Es ist aber auch möglich, die beiden Abstände unterschiedlich auszubilden, um ein gewünschtes "Übersetzungsverhältnis" zu schaffen. Durch die Wahl geeigneter Abstände können der durch die Vorspannkraft erzeugten Schwenkwinkel bzw. die auf die dritte Laufrolle wirkende Kraft bedarfsgerecht angepasst werden.

Gemäß einer weiteren Ausführungsform ist eine Anschlageinrichtung vorgesehen, durch die eine gegen die Vorspannkraft wirkende Verschwenkung des Schwenkarms begrenzbar ist. Bevorzugt ist die Anschlageinrichtung justierbar, um den Transportwagen an die jeweils vorliegenden Bedingungen anpassen zu können. Die Anschlageinrichtung kann eine Schraube umfassen. Bei einer besonders einfachen Ausführungsform der Anschlageinrichtung bildet ein freies Ende der Schraube den Anschlag für den Schwenkarm.

Grundsätzlich ist es zusätzlich oder alternativ auch denkbar, einen Anschlag vorzusehen, der die Verschwenkung des Schwenkarms in der anderen Richtung - also in Richtung der Vorspannkraft - begrenzt.

Die Anschlageinrichtung kann mit einem Anschlagabschnitt zusammenwirken, der an einem die dritte Laufrolle tragenden Abschnitt des Schwenkarms vorgesehen ist. Beispielsweise ist der Anschlagabschnitt an einem Vorsprung angeordnet, der sich seitlich aus dem Schwenkarm erstreckt.

Ein Abstand zwischen der ersten und der zweiten Drehachse kann größer sein als ein Abstand zwischen der ersten und der dritten Drehachse und/oder ein Abstand zwischen der zweiten und der dritten Drehachse, wenn die Anschlageinrichtung die Verschwenkung des Schwenkarms begrenzt und/oder wenn der Transportwagen sich in einem geraden Abschnitt der Transportschiene befindet. Es kann vorgesehen sein, dass die dritte Drehachse in Längsrichtung der Transportschiene gesehen in einem Bereich um eine Mitte des Abstands zwischen der ersten und der zweiten Drehachse angeordnet ist. Die Größe des Bereichs hängt von den geometrischen Gegebenheiten und insbesondere von der Ausgestaltung und Anordnung des Schwenkarms ab. Beispielsweise ist dieser Bereich etwa kleiner als 20 %, bevorzugt kleiner 10 % des Abstands zwischen der ersten und der zweiten Drehachse.

Oder anders formuliert: Die dritte Drehachse kann in einem Bereich um eine Gerade liegen, die eine Gerade senkrecht in deren Mitte schneidet, die die erste und die zweite Drehachse verbindet.

Eine besonders kompakte Bauform des Transportwagens ergibt sich, wenn der Grundkörper zusammen mit dem Schwenkarm in einer Draufsicht auf eine der Transportschiene abgewandten Seite im Wesentlichen die Grundform eines gleichschenkligen, insbesondere gleichseitigen Dreiecks aufweist, wobei die Drehachsen der Laufrollen im Bereich der Spitzen des Dreiecks angeordnet sind, so dass die Drehachsen ebenfalls ein gleichschenkliges, insbesondere gleichseitiges Dreieck bilden. Es ist aber auch denkbar, dass die Grundform und Anordnung der Drehachsen keine ähnliche geometrische Form aufweisen. Die Wahl der Grundform des Grundkörpers und die Anordnung der Drehachsen kann für den jeweiligen Anwendungsfall optimiert werden.

Sind beispielsweise zwei ortsfeste Laufrollen und zwei Laufrollen vorgesehen, die jeweils an einem Schwenkarm angeordnet sind, so können deren Drehachse derart angeordnet sein, dass sie ein Viereck (z.B. Quadrat, Rechteck oder Trapez) bilden, wenn Anschlageinrichtung die Verschwenkung der Schwenkarme begrenzt und/oder wenn der Transportwagen sich in einem geraden Abschnitt der Transportschiene befindet.

Gemäß einem Ausführungsbeispiel weist der Grundkörper eine Ausnehmung im Bereich einer der Spitzen des Dreiecks auf, in der ein Abschnitt des Schwenkarms beweglich angeordnet ist. Die beiden anderen Spitzen des Dreiecks werden durch den Grundkörper gebildet.

Der Grundkörper kann eine Ebene definieren, von der sich zumindest ein Trägerabschnitt erstreckt, der zumindest eine um eine vierte Drehachse drehbar gelagerte vierte Laufrolle trägt, die mit einer dritten Lauffläche zusammenwirkt, die an einer von der Transportschiene beabstandeten Stützschiene ausgebildet ist. Insbesondere erstreckt sich der Trägerabschnitt senkrecht von dem Grundkörper.

Die vierte Drehachse kann parallel zu der der ersten, zweiten und/oder dritten Drehachse angeordnet sein. Die vierte Laufrolle kann an einem freien Ende des Trägerabschnitts angeordnet sein. Sie kann einen kleineren Durchmesser aufweisen als die erste, zweite und/oder dritte Laufrolle. Bevorzugt sind die erste, zweite und/oder dritte Laufrolle Gleichteile.

Die vierte Drehachse kann in etwa in der Mitte zwischen der ersten und der zweiten Drehachse liegen. Insbesondere liegt sie auf einer Geraden, die die erste und die zweite Drehachse verbindet.

Insbesondere dient die vierte Laufrolle zur Aufnahme von auf den Transportwagen wirkenden Kippmomenten und/oder anderen Belastungen.

Gemäß verschiedener Ausführungsformen sind die erste Laufrolle, die zweite Laufrolle, die dritte Laufrolle und - falls vorhanden - die vierte Laufrolle keine Antriebsrollen. D. h. der Antrieb des Transportwagens erfolgt nicht über die Laufrollen sondern mittels einer separaten Antriebseinrichtung. Eine solche Antriebseinrichtung kann ein Linearmotor sein. Der Transportschiene kann eine Mehrzahl von in Transportrichtung hintereinander angeordneten Statoreinheiten (umfassend z.B. Spulenanordnungen) zugeordnet sein, die zusammen mit einer an dem zumindest einen Transportwagen angeordneten Läufereinheit (umfassend z.B. eine Permanentmagnetanordnung) einen solchen Linearmotor zu bilden, mittels dem der zumindest eine Transportwagen entlang der Transportschiene bewegbar ist.

Insbesondere ist die Läufereinheit an dem Trägerabschnitt angeordnet. Beispielsweise ist die Läufereinheit zwischen dem Grundkörper und der vierten Laufrolle angeordnet. Die vierte Laufrolle kann bei dieser Konfiguration vorteilhaft dazu beitragen, die zwischen der Läufereinheit und Statoreinheiten auftretenden Magnetkräfte aufzunehmen.

Gemäß einer weiteren Ausführungsform umfasst die Vorspanneinrichtung ein elastisches Element, insbesondere eine Schraubenfeder. Es kann eine Anschlageinrichtung für das elastische Element vorgesehen sein, die justierbar ist, um die Vorspannkraft variieren zu können. Dies ermöglicht es, die Eigenschaften des Transportwagens an die jeweils vorliegenden Bedingungen anzupassen. Um das elastische Element zu schützen, kann es zumindest abschnittsweise in einer Bohrung des Grundkörpers angeordnet sein. Beispielsweise ist ein Kanal vorgesehen, in dem eine die Vorspannkraft bereitstellende Schraubenfeder größtenteils angeordnet ist.

Nachfolgend wird die vorliegende Erfindung rein beispielhaft anhand vorteilhafter Ausführungsformen unter Bezugnahme auf die beigefügten Zeichnungen erläutert. Es zeigen:

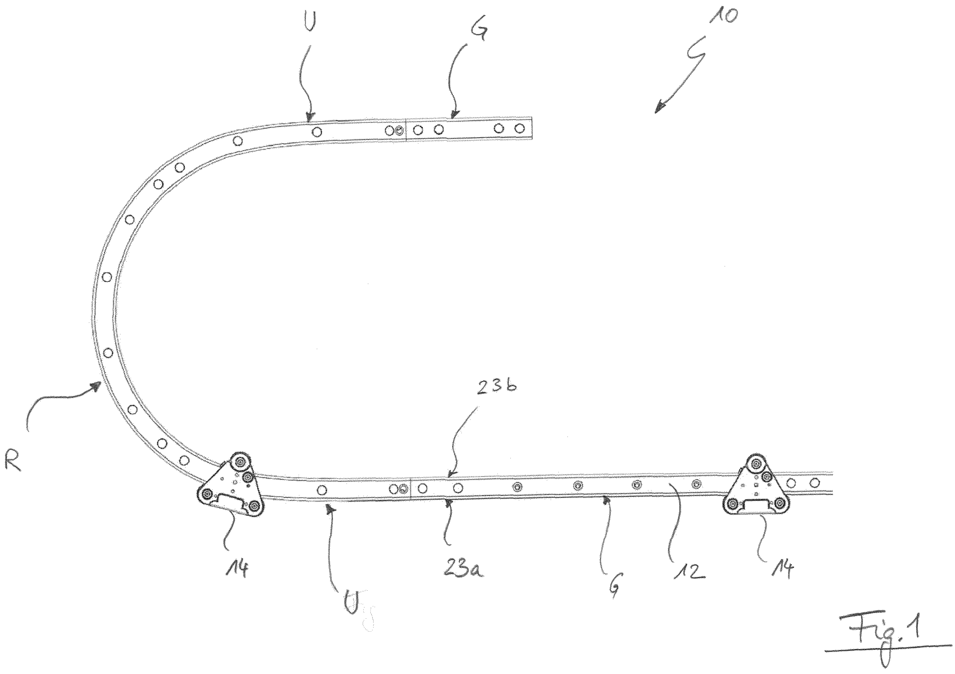

- Fig. 1: eine Draufsicht auf einen Teil eines Transportsystems (vereinfachte Ansicht),
- Fig. 2: eine perspektivische Ansicht eines Ausschnitts des Transportsystems,
- Fig. 3, 4: verschiedene Perspektivansichten eines Transportwagens,
- Fig. 5: eine Ansicht des Transportwagens von unten,
- Fig. 6: eine Schnittansicht des Transportwagens entlang der Schnittlinie B-B (siehe Fig. 5),
- Fig. 7: eine Ansicht einer zweiten Ausführungsform eines Transportwagens von unten,
- Fig. 8, 9: verschiedene Perspektivansichten des Transportwagens gemäß Fig. 7 und
- Fig. 10: eine dritte Ausführungsform eines Transportwagens.

Ein Transportsystem 10 weist eine Transportschiene 12 mit seitlichen Laufflächen 23a, 23b auf, entlang derer Transportwagen 14 verfahren werden können. Der Einfachheit halber wird das System 10 nur teilweise dargestellt. Für das Verständnis der vorliegenden Erfindung nicht erforderliche Bestandteile wurden weggelassen.

Im vorliegenden Ausführungsbeispiel weist das Transportsystem 10 Abschnitte G mit einem geradlinigen Transportweg auf, die über Übergangsabschnitte U mit vergleichsweise komplexer Geometrie in Kurvenabschnitte R übergehen, die einen konstanten Krümmungsradius aufweisen. Es versteht sich, dass abweichend von dem dargestellten Beispiel Transportschienen mit beliebiger Streckenführung realisiert werden können.

Entlang des durch die Transportschiene 12 festgelegten Transportweges können beispielsweise Bearbeitungsstationen vorgesehen sein, an denen auf den Transportwagen 14 angeordnete Werkstücke bearbeitet werden.

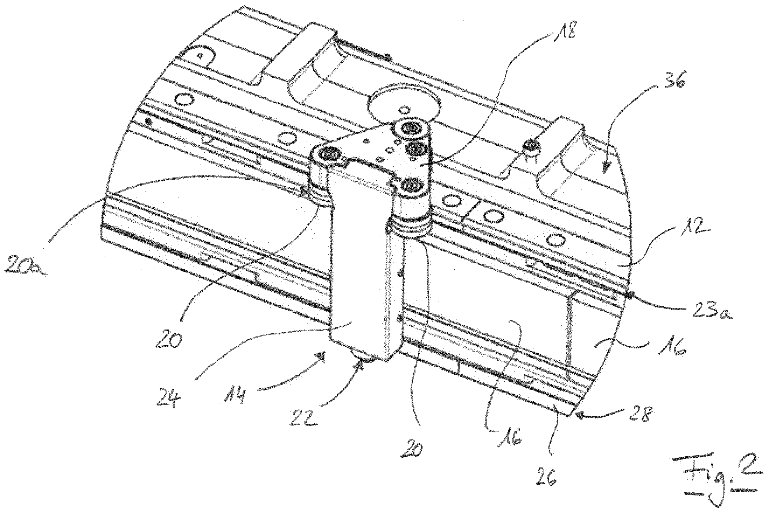

Fig. 2 zeigt eine perspektivische Ansicht eines Ausschnitts des geradlinigen Abschnitts G mit einem Transportwagen 14. Der Antrieb des Transportwagens 14 erfolgt durch einen Linearmotor, der in Längsrichtung der Transportschiene 12 hintereinander angeordnete Statoreinheiten 16 aufweist, die mit einer an dem Transportwagen 14 angeordneten Läufereinheit (nicht zu sehen) zusammenwirkt. Die Läufereinheit kann eine Permanentmagnetanordung umfassen. Durch eine entsprechende Ansteuerung der Einheiten 16 werden sich in Transportrichtung und zeitlich veränderliche Magnetfelder erzeugt, die den Wagen 14 zu einer Bewegung entlang der Transportschiene 12 antreiben. Derartige Linearmotoren sind grundsätzlich bekannt.

Der Transportwagen 14 umfasst einen Grundkörper 18, an dem zwei Laufrollen 20 gelagert sind. Sie sind relativ zu dem Grundkörper 18 räumlich fixiert. Die Laufrollen 20 wirken mit der an einer Seite der Transportschiene 12 angeordneten Lauffläche 23a zusammen. Die Lauffläche 23a weist in einem Querschnitt eine Keilform auf, die in entsprechende Keilnuten 20a der Laufrollen 20 eingreift.

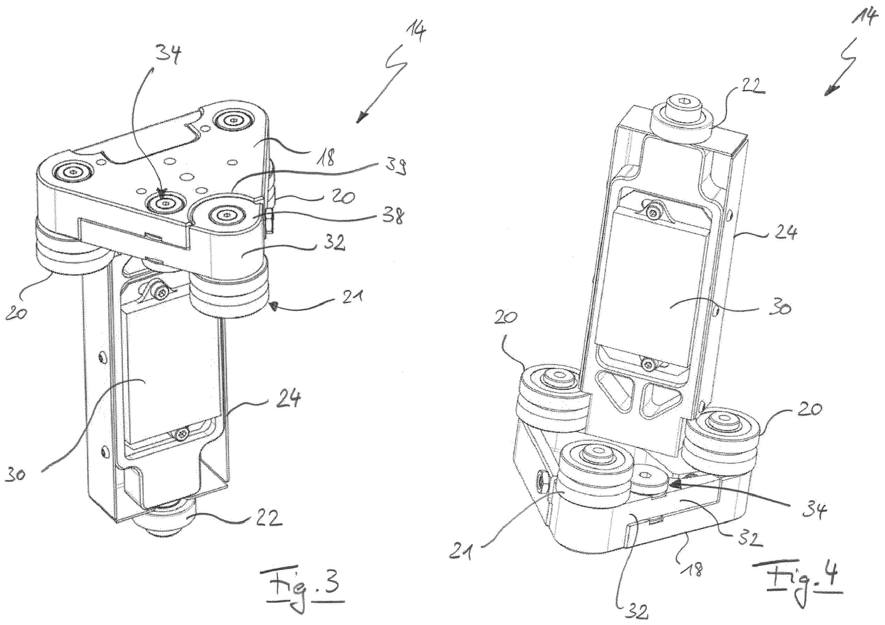

Der gegenüberliegenden Seite der Transportschiene 12 ist eine weitere Laufrolle zugeordnet, die mit der Lauffläche 23b zusammenwirkt. Sie ist in der Fig. 2 jedoch nicht sichtbar. Sie wird nachfolgend anhand der Fig. 3 bis 6 beschrieben.

Die vorstehend beschriebene Läufereinheit des Transportwagens 14 ist an einem Trägerabschnitt 24 angeordnet, der sich senkrecht von dem Grundkörper 18 nach unten erstreckt. Aufgrund der bei Betrieb des Linearmotors zwischen der Läufereinheit und den Statoreinheiten 16 auftretenden Kräften entstehen Kippmomente, die auf den Grundkörper 18 und dessen Führung an der Transportschiene 12 wirken. Um diese Kippmomente aufzunehmen, ist an dem freien Ende des Trägerabschnitts 24 eine Laufrolle 22 vorgesehen, die mit einer Lauffläche 26 einer Stützschiene 28 zusammenwirkt. Die Drehachsen der Laufrollen 20, 22 sind parallel angeordnet.

Die Statoreinheiten 16 liegen also zwischen den Schienen 12 und 28.

Die Stützschiene 28, die Statoreinheiten 16 und die Transportschiene 12 sind an einem Gestell 36 lösbar befestigt. Es versteht sich, dass der Aufbau modular sein kann, sodass einzelne Module mit bestimmten Längen und/oder bestimmten Krümmungsradien auf einfache Weise miteinander kombiniert werden können, um ein Transportsystem mit der gewünschten Konfiguration zu erhalten.

Die Anordnung und Ausgestaltung der Laufrolle 22 kann bedarfsgerecht gewählt werden. Es ist beispielsweise möglich, eine Laufrollen 22 vorzusehen, deren Drehachse senkrecht zu denen der Laufrollen 20 ausgerichtet ist, beispielsweise um vertikal wirkende Kräfte aufzunehmen. Es ist auch denkbar, mehrere Laufrollen 22 mit parallelen oder unterschiedlich ausgerichteten Drehachsen vorzusehen.

Fig. 3 und 4 zeigen verschiedene Perspektivansichten des Transportwagens 14, sodass nun auch die Läufereinheit zu sehen ist (Läufereinheit 30). Zu sehen ist auch die Laufrolle 22, die im vorliegenden Ausführungsbeispiel im Gegensatz zu den Laufrollen 20 keine Keilnut 20a aufweist. Entsprechend ist die Lauffläche 26 der Stützschiene 28 eben.

Neben den drehbar aber räumlich fest an dem Grundkörper 18 angeordneten Laufrollen 20 trägt dieser eine weitere Laufrollen 21, die mit der der Lauffläche 23a gegenüberliegenden Lauffläche 23b der Transportschiene 12 zusammenwirkt. Anders als die Laufrollen 20 ist die Laufrolle 21 allerdings relativ zu dem Grundkörper 18 beweglich, da sie an einem Schwenkarm 32 montiert ist, der mittels einer Schwenkachse 34 verschwenkbar an dem Grundkörper 18 gelagert ist.

In einer Draufsicht bilden der Grundkörper 18 und ein Lager der Laufrolle 21 tragender Lagerabschnitt 38 des Schwenkarms 32 eine Grundform eines in etwa gleichseitigen Dreiecks, was die kompakte Bauweise des Transportwagens 14 verdeutlicht. Zur Aufnahme des Abschnitts 38 weist der Grundkörper 18 eine Ausnehmung 39 auf. Im vorliegenden Ausführungsbeispiel liegen die Oberflächen des Grundkörpers 18 und des Abschnitts 38 im Wesentlichen in einer Ebene.

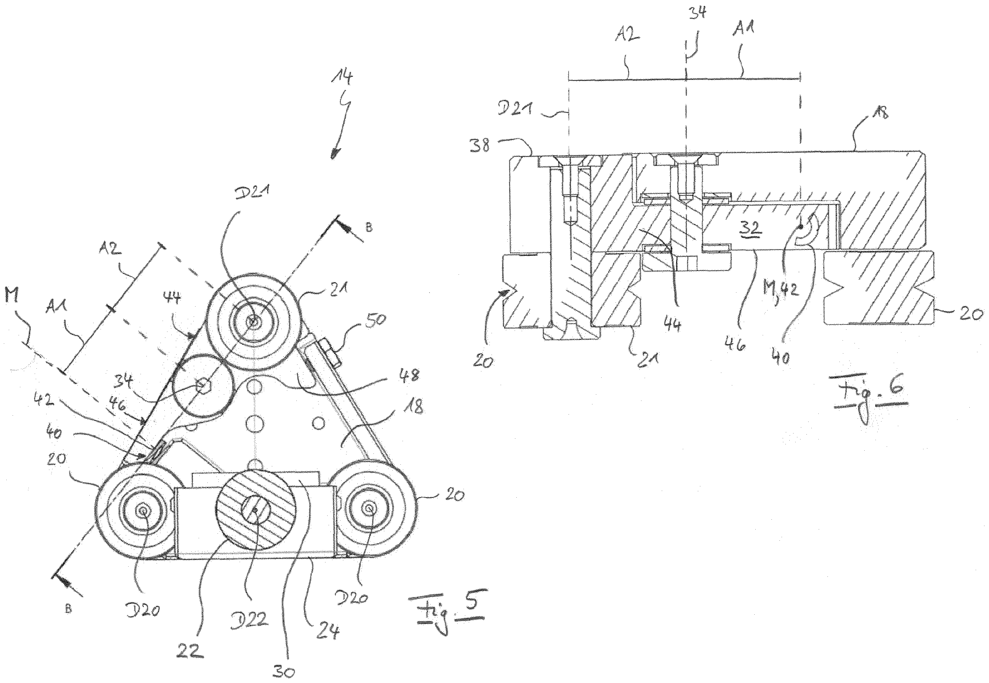

Unter Bezugnahme auf die Fig. 5 und 6 wird nachfolgend der Aufbau des Schwenkarms 32 eingehender beleuchtet.

Fig. 5 zeigt eine Ansicht des Transportwagens 14 von unten. Gut zu sehen sind die Laufrollen 20 mit ihren jeweiligen Drehachsen D20, die beispielsweise einen Abstand von 60 bis 120 mm haben. Bei Bedarf kann auch ein größerer oder kleinerer Abstand in Betracht gezogen werden. Dieser Abstand ist im vorliegenden Ausführungsbeispiel größer als der Abstand der Drehachsen D20 von einer Drehachse D21 der Laufrolle 21 (bei normalem Betreib des Wagens 14). Die geometrischen Verhältnisse können bei Bedarf aber auch anders gewählt werden.

Die Drehachse D20, D22 liegen im vorliegenden Beispiel auf einer Geraden. Dies muss jedoch nicht zwingend so sein, da die Laufrollen 20, 22 unterschiedlichen Durchmesser aufweisen und/oder die Laufflächen 23a, 26 - in einer Richtung parallel zu dem Trägerabschnitt 24 gesehen - versetzt zueinander angeordnet sein können. Die Laufrollen 22 liegt - in Richtung der Schiene 12 gesehen - in etwa in der Mitte zwischen den Laufrollen 20.

Die Drehachse D21 der Laufrolle 21 kann relativ zu dem Grundkörper 18 des Transportwagen 24 verschwenkt werden, um beispielsweise Änderungen der Breite der Transportschiene 12 und/oder Toleranzen aufnehmen zu können. Wie vorstehend bereits beschrieben wurde, ist die Laufrollen 21 an dem Schwenkarm 32 angeordnet. Dieser ist um die Schwenkachse 34 verschwenkbar.

Um die Laufrolle 21 mit einer wohldefinierten Kraft gegen die ihr zugeordnete Lauffläche 23b pressen zu können und damit über den gesamten Transportweg eine zuverlässige Führung des Transportwagen 14 an der Transportschiene 12 zu gewährleisten, wirkt auf den Schwenkarm 32 eine Vorspannkraft, die durch eine Schraubenfeder 40, die in einer Bohrung des Grundkörpers 18 angeordnet ist, bereitgestellt wird. Anstelle der Schraubenfeder 40 kann ein beliebiges anderes elastisches Element verwendet werden, welches die erforderliche Kraft aufbringen kann. Es kann ein Justiermechanismus (nicht gezeigt) vorgesehen sein, mit dem die Vorspannkraft an die jeweils vorliegenden Bedingungen angepasst werden kann. Z.B. kann eine Anlageposition des elastischen Elements an dem Grundkörper veränderbar sein, um die Vorspannkraft justieren zu können.

Die Schraubenfeder 40 wirkt in einem Kontaktpunkt 42 auf den Schwenkarm 32. Der Kontaktpunkt 42 wird durch den Schnittpunkt einer Mittelachse M der Schraubenfeder 40 mit einer mit ihr zusammenwirkenden Seitenfläche des Arms 32 definiert. Ein Abstand A1 des Kontaktpunkts 42 von der Schwenkachse 34 entspricht einem Abstand A2 der Drehachse D21 von der Schwenkachse 34. Die Abstände A1, A2 können z.B. in einem Bereich zwischen 25 und 30 mm liegen. Die geometrischen Verhältnisse können bei Bedarf aber auch anders gewählt werden. Insbesondere können die Abstände A1 und A2 unterschiedlich groß gewählt werden, z.B. um eine geeignete "Übersetzung" der Vorspannkraft zu erreichen und/oder den Verschwenkweg zu beeinflussen.

Die Schwenkachse 34 teilt also den Schwenkarm 32 funktionell in zwei Abschnitte, nämlich in den die Laufrolle 21 tragenden Rollenabschnitt 44 und in den mit der Vorspannkraft beaufschlagten Hebelabschnitt 46.

Der Rollenabschnitt 44 weist einen seitlich auskragenden Anschlagabschnitt 48 auf, der mit einer Anschlageinrichtung 50 zusammenwirkt, um die Verschwenkung des Schwenkarms 32 in einer gegen die Vorspannkraft wirkenden Richtung zu begrenzen. Im vorliegenden Ausführungsbeispiel umfasst die Anschlageinrichtung 50 eine Schraube, mittels derer die Anschlagposition auf einfache Weise justiert werden kann.

Fig. 6 zeigt den Transportwagen 14 in einer Schnittansicht in der in Fig. 5 eingezeichneten Schnittebene B-B, um die vorliegenden geometrischen Verhältnisse zu verdeutlichen. Diese Schnittebene B-B enthält sowohl die Drehachse 21 als auch die Schwenkachse 34 und den Kontaktpunkt 42, d. h. die genannten Komponenten liegen - in einer Draufsicht gesehen (siehe Fig. 5) - auf einer geraden Linie.

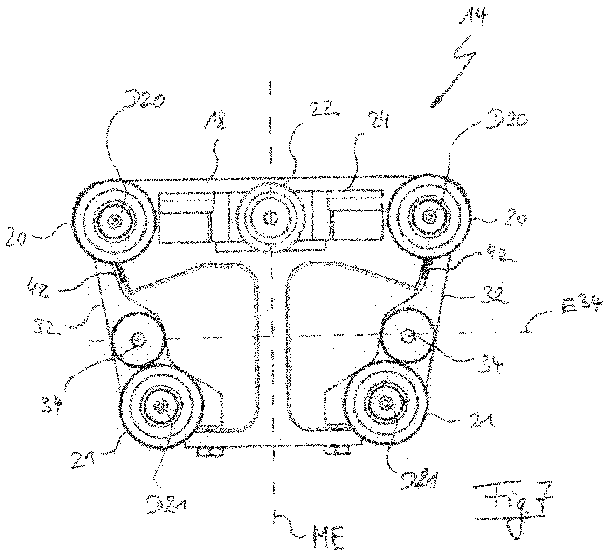

Fig. 7 zeigt eine weitere Ausführungsform des Transportwagens 14, um zu verdeutlichen, dass die Anzahl der Laufrollen 21 nicht beschränkt ist.

Der Wagen 14 weist zwei identisch ausgebildete Schwenkarme 32 auf, die jeweils eine Laufrolle 21 tragen. Der hier beispielhaft beschriebene Transportwagen 14 ist spiegelsymmetrisch zu einer Mittelebene ME aufgebaut. Die Drehachse D22 der Laufrolle 22 liegt in dieser Ebene ME.

Die Drehachsen D20 und D21 bilden in einem wohldefinierten Zustand, beispielsweise wenn sich der Transportwagen 14 in einem geradlinigen Abschnitt G der Transportschiene 12 befindet, im Wesentlichen ein gleichschenkliges Trapez. Der Grundkörper 18 bildet ebenfalls näherungsweise die Form eines gleichschenkligen Trapezes nach.

Die Schwenkachsen 34 der Schwenkarme 32 liegen in einer gemeinsamen Ebene E34. Die Schwenkachsen 34 liegen zudem - wie bei dem Transportwagen gemäß den Fig. 3 bis 6 - auf einer gerade Linie, die durch den jeweiligen Kontaktpunkt 42 und die Drehachse D21 des entsprechenden Arms 32 definiert wird.

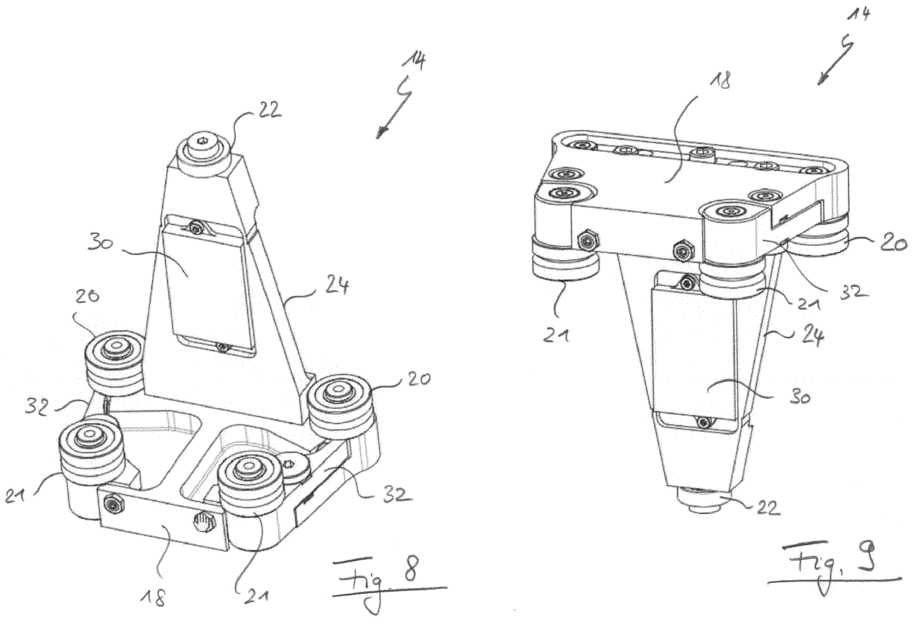

In den Fig. 8 und 9 ist der Transportwagen 14 der Fig. 7 in verschiedenen Perspektiven gezeigt, um dessen dreidimensionalen Aufbau zu verdeutlichen. Es ist unter anderem zu erkennen, dass der Trägerabschnitt 24 - anders als der im Wesentlichen rechteckige Trägerabschnitt 24 des Transportwagens gemäß den Fig. 3 bis 6 - eine trapezförmige oder dreieckige Grundform aufweist.

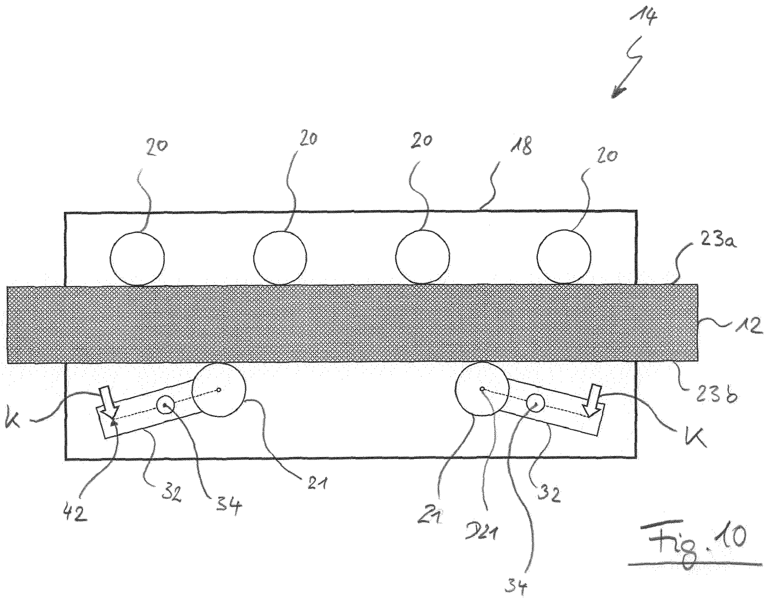

Fig. 10 zeigt einen weiteren Transportwagen 14 mit einem rechteckigen Grundkörper 18, an dem vier Laufrollen 20 ortsfest angeordnet sind. Sie wirken mit der Lauffläche 23a der Transportschiene 12 zusammen. Zwei Laufrollen 21, die jeweils an einem Schwenkarm 32 angeordnet sind, wirken mit der Lauffläche 23b zusammen. Die Drehachsen D21 der Laufrollen 21, die Schwenkachsen 34 der Arme 32 und die Kontaktpunkte 42, an denen die Vorspannkraft (symbolisch dargestellt durch Pfeile K) angreift, liegen jeweils auf einer geraden Linie.

Diese Ausführungsform des Transportwagens 14 soll verdeutlichen, dass unterschiedlichen Anzahlen von fest am Grundkörper 18 angeordneten Laufrollen 20 einerseits und von verschwenkbar am Grundkörper 18 angeordneten Laufrollen 21 andererseits vorgesehen sein können.

Durch das erfindungsgemäße Konzept, einen Transportwagen mit zumindest zwei festen Laufrollen und mit zumindest einer verschwenkbaren Laufrolle, die von einem in vorstehend beschriebener Weise ausgebildeten Schwenkarm getragen wird, vorzusehen, ist es möglich, die zumindest drei Rollen mit einer in den verschiedenen Betriebszuständen jeweils konstanten Kraft gegen die Laufflächen der Transportschiene zu drücken und damit eine zuverlässige Führung des Wagens an der Schiene zu gewährleisten. Die Vorspannkraft der diese Kraft erzeugenden Vorspanneinrichtung kann beispielsweise auf einfache Weise durch eine Feder, insbesondere Schraubenfeder, mit einer geeigneten Federkonstante aufgebracht und bei Bedarf mit einer optional vorgesehenen Justiereinrichtung angepasst werden.

### Bezugszeichenliste

- 10: Transportsystem
- 12: Transportschiene
- 14: Transportwagen
- 16: Statoreinheit
- 18: Grundkörper
- 20, 21, 22: Laufrolle
- 20a: Keilnut
- 23a, 23b, 26: Lauffläche
- 24: Trägerabschnitt
- 28: Stützschiene
- 30: Läufereinheit
- 32: Schwenkarm
- 34: Schwenkachse
- 36: Gestell
- 38: Lagerabschnitt
- 39: Ausnehmung
- 40: Schraubenfeder
- 42: Kontaktpunkt
- 44: Rollenabschnitt
- 46: Hebelabschnitt
- 48: Anschlagabschnitt
- 50: Anschlageinrichtung

- G: geradliniger Abschnitt
- U: Übergangsabschnitt
- R: Kurvenabschnitt
- D20, D21, D22: Drehachse
- A1, A2: Abstand
- B-B: Schnittebene
- M: Mittelachse
- ME: Mittenebene
- E34: Schwenkachsenebene
- K: Vorspannkraft

## Patentansprüche

1. Transportsystem zum Transport von Objekten mit einer Transportschiene (12), die zumindest eine erste Lauffläche (23a) und eine zweite Lauffläche (23b) aufweist, die einander gegenüberliegend angeordnet sind, und mit zumindest einem Transportwagen (14) umfassend:
- einen Grundkörper (18), der mit einem Objektträger zur Aufnahme zumindest eines zu transportierenden Objekts gekoppelt oder koppelbar ist,
- zumindest eine um eine erste Drehachse (D20) drehbar gelagerte erste Laufrolle (20) und zumindest eine um eine zweite Drehachse (D20) drehbar gelagerte zweite Laufrolle (20), wobei die erste und die zweite Laufrolle (20) derart an dem Grundkörper (18) angeordnet sind, dass die erste und die zweite Drehachse (D20) relativ zu dem Grundkörper (18) ortsfest sind und dass sie mit der ersten Lauffläche (23a) zusammenwirken,
- zumindest eine um eine dritte Drehachse (D21) drehbar gelagerte dritte Laufrolle (21), die an einem Schwenkarm (32) angeordnet ist, der um eine Schwenkachse (34) verschwenkbar an dem Grundkörper (18) angeordnet ist,
wobei der Schwenkarm (32) durch eine zwischen dem Grundkörper (18) und einem Kontaktpunkt (42) des Schwenkarms (32) wirkende Vorspanneinrichtung (40) mit einer Vorspannkraft (K) beaufschlagbar ist, durch die die dritte Laufrolle (21) gegen die zweite Lauffläche (23b) gedrückt wird, und
wobei die dritte Drehachse (D21), die Schwenkachse (34) und der Kontaktpunkt (42) auf einer geraden Linie liegen,
**dadurch gekennzeichnet, dass**
die Schwenkachse (34) zwischen der dritten Drehachse (D21) und dem Kontaktpunkt (42) angeordnet ist.

2. Transportsystem nach Anspruch 1,
wobei ein erster Abstand (A1) zwischen der Schwenkachse (34) und dem Kontaktpunkt (42) und ein zweiter Abstand (A2) zwischen der Schenkachse (34) und der dritten Drehachse (D21) gleich groß sind.

3. Transportsystem nach einem der vorstehenden Ansprüche,
wobei eine Anschlageinrichtung (50) vorgesehen ist, durch die eine gegen die Vorspannkraft (K) wirkende Verschwenkung des Schwenkarms (32) begrenzbar ist.

4. Transportsystem nach Anspruch 3,
wobei die Anschlageinrichtung (50) justierbar ist, insbesondere wobei die Anschlageinrichtung eine Schraube umfasst.

5. Transportsystem nach Anspruch 3 oder 4,
wobei ein die dritte Laufrolle (21) tragender Abschnitt (44) des Schwenkarms (32) einen Anschlagabschnitt (48) aufweist, der mit der Anschlageinrichtung (50) zusammenwirkt, um die gegen die Vorspanneinrichtung (40) wirkende Verschwenkung des Schwenkarms (32) zu begrenzen.

6. Transportsystem nach einem der vorstehenden Ansprüche,
wobei ein Abstand zwischen der ersten und der zweiten Drehachse (D20) größer ist als ein Abstand zwischen der ersten und der dritten Drehachse (D20 bzw. D21) und/oder ein Abstand zwischen der zweiten und der dritten Drehachse (D20 bzw. D21), wenn die Anschlageinrichtung (50) die Verschwenkung des Schwenkarms (32) begrenzt und/oder wenn der Transportwagen (14) sich in einem geraden Abschnitt (G) der Transportschiene (12) befindet..

7. Transportsystem nach einem der vorstehenden Ansprüche,
wobei der Grundkörper (18) zusammen mit dem Schwenkarm (32) in einer Draufsicht auf eine der Transportschiene (12) abgewandten Seite im Wesentlichen die Grundform eines gleichschenkligen, insbesondere gleichseitigen Dreiecks aufweist, wobei die Drehachsen (D20, D21) der Laufrollen (20 bzw. 21) im Bereich der Spitzen des Dreiecks angeordnet sind.

8. Transportsystem nach einem der vorstehenden Ansprüche,
wobei der Grundkörper (18) eine Ebene definiert, von der sich zumindest ein Trägerabschnitt (24) erstreckt, der zumindeset eine um eine vierte Drehachse (D22) drehbar gelagerte vierte Laufrolle (22) trägt, die mit einer dritten Lauffläche (26) zusammenwirkt, die an einer von der Transportschiene (12) beabstandeten Stützschiene (28) ausgebildet ist, insbesondere wobei sich der Trägerabschnitt (24) senkrecht von dem Grundkörper (18) erstreckt.

9. Transportsystem nach Anspruch 8,
wobei die vierte Drehachse (D22) parallel zu der der ersten, zweiten und/oder dritten Drehachse (D20, D21) angeordnet ist und/oder wobei die vierte Laufrolle (D22) an einem freien Ende des Trägerabschnitts (24) angeordnet ist.

10. Transportsystem nach Anspruch 8 oder 9,
wobei die vierte Laufrolle (22) einen kleineren Durchmesser aufweist als die erste, zweite und/oder dritte Laufrolle (D20 bzw. D21).

11. Transportsystem nach einem der vorstehenden Ansprüche,
wobei die erste Laufrolle (20), die zweite Laufrolle (20), die dritte Laufrolle (21) und - falls vorhanden - die vierte Laufrolle (22) keine Antriebsrollen.

12. Transportsystem nach 11,
wobei der Transportschiene (12) eine Mehrzahl von in Transportrichtung hintereinander angeordneten Statoreinheiten (16) zugeordnet ist, die zusammen mit einer an dem zumindest einen Transportwagen (14) angeordneten Läufereinheit (30) einen Linearmotor zu bilden, mittels dem der zumindest eine Transportwagen (14) entlang der Transportschiene (12) bewegbar ist.

13. Transportsystem nach Anspruch 12,
wobei die Läufereinheit (30) an dem Trägerabschnitt (24) angeordnet ist, insbesondere wobei die Läufereinheit (30) zwischen dem Grundkörper (18) und der vierten Laufrolle (22) angeordnet ist.

14. Transportsystem nach einem der vorstehenden Ansprüche,
wobei die Vorspanneinrichtung ein elastisches Element, insbesondere eine Schraubenfeder (40), umfasst, insbesondere wobei eine Anschlageinrichtung des elastischen Elements justierbar ist, um die Vorspannkraft (K) variieren zu können.

15. Transportsystem nach Anspruch 14,
wobei das elastische Element (40) zumindest abschnittsweise in einer Bohrung des Grundkörpers (18) angeordnet ist.

## Claims

1. A transport system for transporting objects, said transport system comprising a transport rail (12), which has at least a first running surface (23a) and a second running surface (23b) that are arranged disposed opposite one another, and at least one transport trolley (14) comprising:
- a base body (18) which is coupled or can be coupled to an object carrier for receiving at least one object to be transported,
- at least a first roller (20) rotatably supported about a first axis of rotation (D20) and at least a second roller (20) rotatably supported about a second axis of rotation (D20), wherein the first and the second roller (20) are arranged at the base body (18) such that the first and the second axis of rotation (D20) are stationary relative to the base body (18) and such that they cooperate with the first running surface (23a),
- at least a third roller (21) which is rotatably supported about a third axis of rotation (D21) and which is arranged at a pivot arm (32) that is pivotably arranged at the base body (18) about a pivot axis (34),
wherein the pivot arm (32) can be acted on by a preloading force (K), by which the third roller (21) is pressed against the second running surface (23b), by a preloading device (40) acting between the base body (18) and a contact point (42) of the pivot arm (32), and
wherein the third axis of rotation (D21), the pivot axis (34) and the contact point (42) lie on a straight line,
**characterized in that**
the pivot axis (34) is arranged between the third axis of rotation (D21) and the contact point (42).

2. A transport system according to claim 1,
wherein a first distance (A1) between the pivot axis (34) and the contact point (42) and a second distance (A2) between the pivot axis (34) and the third axis of rotation (D21) are of equal magnitude.

3. A transport system according to one of the preceding claims,
wherein an abutment device (50) is provided by which a pivoting of the pivot arm (32) can be limited, said pivoting acting against the preloading force (K).

4. A transport system according to claim 3,
wherein the abutment device (50) is adjustable, in particular wherein the abutment device comprises a screw.

5. A transport system according to claim 3 or 4,
wherein a section (44) of the pivot arm (32) that carries the third roller (21) has an abutment section (48) which cooperates with the abutment device (50) to limit the pivoting of the pivot arm (32), said pivoting acting against the preloading device (40).

6. A transport system according to any one of the preceding claims,
wherein a distance between the first and the second axis of rotation (D20) is greater than a distance between the first and the third axis of rotation (D20 or D21) and/or a distance between the second and the third axis of rotation (D20 or D21) when the abutment device (50) limits the pivoting of the pivot arm (32) and/or when the transport trolley (14) is located in a straight section (G) of the transport rail (12).

7. A transport system according to any one of the preceding claims,
wherein the base body (18) together with the pivot arm (32) substantially has the basic shape of an isosceles triangle, in particular an equilateral triangle, in a plan view of a side facing away from the transport rail (12), wherein the axes of rotation (D20, D21) of the rollers (20 or 21) are arranged in the region of the apexes of the triangle.

8. A transport system according to any one of the preceding claims,
wherein the base body (18) defines a plane from which at least one carrier section (24) extends, said carrier section carrying at least a fourth roller (22) which is rotatably supported about a fourth axis of rotation (D22) and which cooperates with a third running surface (26) that is formed at a support rail (28) spaced apart from the transport rail (12), in particular wherein the carrier section (24) extends perpendicular from the base body (18).

9. A transport system according to claim 8,
wherein the fourth axis of rotation (D22) is arranged parallel to the first, second and/or third axis of rotation (D20, D21) and/or wherein the fourth roller (D22) is arranged at a free end of the carrier section (24).

10. A transport system according to claim 8 or 9,
wherein the fourth roller (22) has a smaller diameter than the first, second and/or third roller (D20 or D21).

11. A transport system according to any one of the preceding claims,
wherein the first roller (20), the second roller (20), the third roller (21) and - if present - the fourth roller (22) are not drive rollers.

12. A transport system according to claim 11,
wherein the transport rail (12) is assigned a plurality of stator units (16) which are arranged behind one another in the transport direction and which, together with a runner unit (30) arranged at the at least one transport trolley (14), form a linear motor by means of which the at least one transport trolley (14) can be moved along the transport rail (12).

13. A transport system according to claim 12,
wherein the runner unit (30) is arranged at the carrier section (24), in particular wherein the runner unit (30) is arranged between the base body (18) and the fourth roller (22).

14. A transport system according to any one of the preceding claims,
wherein the preloading device comprises an elastic element, in particular a helical spring (40), in particular wherein an abutment device of the elastic element can be adjusted to be able to vary the preloading force (K).

15. A transport system according to claim 14,
wherein the elastic element (40) is at least sectionally arranged in a bore of the base body (18).

## Revendications

1. Système de transport destiné au transport d'objets, comprenant un rail de transport (12) qui présente au moins une première surface de roulement (23a) et une deuxième surface de roulement (23b) disposées en vis-à-vis l'une de l'autre, et au moins un chariot de transport (14) comprenant :
- un corps de base (18) qui est couplé ou peut être couplé à un support d'objet destiné à recevoir au moins un objet à transporter,
- au moins un premier galet de roulement (20) monté de manière à pouvoir tourner autour d'un premier axe de rotation (D20) et au moins un deuxième galet de roulement (20) monté de manière à pouvoir tourner autour d'un deuxième axe de rotation (D20), les premier et deuxième galets de roulement (20) étant disposés sur le corps de base (18) de telle sorte que les premier et deuxième axes de rotation (D20) sont fixes par rapport au corps de base (18) et qu'ils coopèrent avec la première surface de roulement (23a),
- au moins un troisième galet de roulement (21) monté de manière à pouvoir tourner autour d'un troisième axe de rotation (D21), qui est disposé sur un bras pivotant (32) monté de manière à pouvoir pivoter autour d'un axe de pivotement (34) sur le corps de base (18),
le bras pivotant (32) pouvant être soumis à une force de précontrainte (K) par un dispositif de précontrainte (40) agissant entre le corps de base (18) et un point de contact (42) du bras pivotant (32), force grâce à laquelle le troisième galet de roulement (21) est pressé contre la deuxième surface de roulement (23b), et
le troisième axe de rotation (D21), l'axe de pivotement (34) et le point de contact (42) étant situés sur une ligne droite,
**caractérisé en ce que**
l'axe de pivotement (34) est disposé entre le troisième axe de rotation (D21) et le point de contact (42).

2. Système de transport selon la revendication 1,
dans lequel une première distance (A1) entre l'axe de pivotement (34) et le point de contact (42) et une deuxième distance (A2) entre l'axe de pivotement (34) et le troisième axe de rotation (D21) sont égales.

3. Système de transport selon l'une des revendications précédentes,
dans lequel est prévu un dispositif de butée (50) permettant de limiter un pivotement du bras pivotant (32) s'opposant à la force de précontrainte (K).

4. Système de transport selon la revendication 3,
dans lequel le dispositif de butée (50) est réglable, en particulier dans lequel le dispositif de butée comprend une vis.

5. Système de transport selon la revendication 3 ou 4,
dans lequel une partie porteuse (44) du bras pivotant (32) supportant le troisième galet de roulement (21) présente une partie de butée (48) qui coopère avec le dispositif de butée (50) afin de limiter le pivotement du bras pivotant (32) s'opposant à l'action du dispositif de précontrainte (40).

6. Système de transport selon l'une des revendications précédentes,
dans lequel une distance entre les premier et deuxième axes de rotation (D20) est supérieure à une distance entre les premier et troisième axes de rotation (D20 et D21, respectivement) et/ou à une distance entre les deuxième et troisième axes de rotation (D20 et D21, respectivement), lorsque le dispositif de butée (50) limite le pivotement du bras pivotant (32) et/ou lorsque le chariot de transport (14) se trouve sur un tronçon rectiligne (G) du rail de transport (12).

7. Système de transport selon l'une des revendications précédentes,
dans lequel le corps de base (18), conjointement avec le bras pivotant (32), présente, dans une vue en plan sur un côté opposé au rail de transport (12), essentiellement la forme de base d'un triangle isocèle, en particulier équilatéral, les axes de rotation (D20, D21) des galets de roulement (20 et 21, respectivement) étant disposés au niveau des sommets du triangle.

8. Système de transport selon l'une des revendications précédentes,
le corps de base (18) définissant un plan à partir duquel s'étend au moins une partie de support (24) qui porte au moins un quatrième galet de roulement (22) monté de manière rotative autour d'un quatrième axe de rotation (D22), qui coopère avec une troisième surface de roulement (26) formée sur un rail de support (28) espacé du rail de transport (12), la partie de support (24) s'étendant notamment perpendiculairement au corps de base (18).

9. Système de transport selon la revendication 8,
dans lequel le quatrième axe de rotation (D22) est disposé parallèlement à celui des premier, deuxième et/ou troisième axes de rotation (D20, D21) et/ou dans lequel le quatrième galet de roulement (D22) est disposé à une extrémité libre de la partie de support (24).

10. Système de transport selon la revendication 8 ou 9,
dans lequel le quatrième galet de roulement (22) présente un diamètre inférieur à celui du premier, du deuxième et/ou du troisième galet de roulement (D20 et D21, respectivement).

11. Système de transport selon l'une des revendications précédentes,
dans lequel le premier galet (20), le deuxième galet (20), le troisième galet (21) et, le cas échéant, le quatrième galet (22) ne sont pas des galets d'entraînement.

12. Système de transport selon la revendication 11,
dans lequel le rail de transport (12) est associé à une pluralité d'unités de stator (16) disposées les unes derrière les autres dans le sens du transport, qui forment, conjointement avec une unité de rotor (30) disposée sur ledit au moins un chariot de transport (14), un moteur linéaire au moyen duquel ledit au moins un chariot de transport (14) peut se déplacer le long du rail de transport (12).

13. Système de transport selon la revendication 12,
dans lequel l'unité de rotor (30) est disposée sur la partie de support (24), en particulier dans lequel l'unité de rotor (30) est disposée entre le corps de base (18) et le quatrième galet de roulement (22).

14. Système de transport selon l'une des revendications précédentes,
dans lequel le dispositif de précontrainte comprend un élément élastique, en particulier un ressort hélicoïdal (40), et dans lequel, en particulier, un dispositif de butée de l'élément élastique est réglable afin de pouvoir faire varier la force de précontrainte (K).

15. Système de transport selon la revendication 14,
dans lequel l'élément élastique (40) est disposé, au moins par sections, dans un alésage du corps de base (18).
